# EUROPEAN PATENT SPECIFICATION

(11) **EP 2 981 043 B1**
(45) Date of publication and mention of the grant of the patent: **04.07.2018**
(21) Application number: 13880563.5
(22) Date of filing: 16.09.2013
(51) Int. Cl.: H04L 29/08, H04L 12/24, H04L 29/06

(54) **METHOD FOR MANAGING PORTAL DEVICE, AND PORTAL DEVICE AND SYSTEM**
VERFAHREN ZUR VERWALTUNG EINER PORTALVORRICHTUNG SOWIE PORTALVORRICHTUNG UND SYSTEM
PROCÉDÉ DE GESTION DE DISPOSITIF DE PORTAIL ET DISPOSITIF ET SYSTÈME DE PORTAIL

(30) Priority: 29.03.2013 CN 201310110126
(43) Date of publication of application: 03.02.2016
(73) Proprietor: ZTE Corporation, Shenzhen, Guangdong 518057 (CN)
(72) Inventor: LIANG, Qiandeng, Shenzhen Guangdong 518057 (CN); WANG, Shuyi, Shenzhen Guangdong 518057 (CN)
(74) Representative: Lavoix
(86) International application number: PCT/CN2013/083593
(87) International publication number: WO 2014/153930

(56) References cited:
- CN-A- 1 859 403
- CN-A- 102 624 707
- CN-A- 103 220 345
- US-A1- 2006 282 545
- US-A1- 2006 282 545
- US-A1- 2008 253 391
- US-A1- 2010 274 893

## Description

### TECHNICAL FIELD

The present disclosure relates to network communication techniques, and in particular to a portal device management method, a portal device and a portal system.

### BACKGROUD

Web authentication techniques are widely used in scenarios such as a campus network where network access authorization is performed after users go online, and corresponding Web authentication techniques have the following problems:
A portal client's selection of a portal server that performs mandatory authentication of a user client has a simple processing logic so that the portal client cannot sense the state of the portal server or accept an indication of load sharing made by the portal server, and when a portal server selected by the portal client for performing mandatory authentication of the user client is busy, the portal server fails to process in time a HyperText Transfer Protocol (HTTP) request from the user client and to push an authentication page to the user client or acquire authentication information of the user client so that the portal client fails to perform in time network authorization on the user client or an authentication failure may even be resulted, thus impacting user experiences;
when information of the portal client and of the portal server such as an Internet Protocol (IP) address pool of the user client locally configured at the portal client changes, it is required to make corresponding changes manually on the portal server side, resulting in tedious operation and maintenance;
when the portal client and the portal server upgrade its portal protocol, a synchronous upgrading needs to be performed on the portal server and the portal client, resulting in tedious operation and maintenance; and
in order to encrypt authentication information of the user client, it is required to configure an encryption key and a decryption key symmetrically on the portal server and the portal client, and these operations impose high requirements for manual intervention, resulting in tedious operation and maintenance with poor security.

US 2006/282545 A1 discloses a method for version negotiation between two entities is provided. Described in the context of communication protocol negotiation, an initiating entity proposes an initial communication protocol version to a receiving entity. In response, the receiving entity accepts the protocol version if it is within the range of its supported versions or proposes an alternative protocol version selecting to be either the highest or lowest protocol version supported by the receiving entity.

US 2008/253391 A1 discloses a group communication system for dynamically changing a version of a group communication protocol from a first version to a second version transparently to external sources and destinations. The system accommodates newly joining members that can only support versions of the protocol other than the version currently in use without interruption in service.

US 2010/274893 A1 concerns a method and apparatus for detecting and limiting focused server overload in a network. A feedback message is received from a downstream server, wherein the feedback message includes a communication protocol statistic. The method and apparatus determine which of one or more counters that store a number of feedback messages received that include the statistic, from an array of counters, are associated with the downstream server using one or more hash functions based on information included in the feedback message. The one or more counters are incremented in response to the feedback message including the statistic. Using the one or more hash functions, a value of the number stored in the one or more counters is determined. The value is determined to be indicative of an overload episode in the network for the downstream server based on whether the value satisfies a predetermined criteria.

### SUMMARY

In view of the above, the embodiments of the disclosure are intended to provide a portal device management method, a portal device and a portal system so that it is possible to achieve the aim of load balancing, the portal client and the portal server can upgrade smoothly, and each of the portal client and the pre-configured portal server can announce its information to its opposite end, thus resulting in convenient and secure operation and maintenance.

To this end, the technical solutions of embodiments of the disclosure are implemented as follows.

An embodiment of the disclosure provides a portal device management method according to claim 1.

An embodiment of the disclosure further provides a portal client according to claim 5. An embodiment of the disclosure further provides a portal system according to claim 8. The dependent claims set out particular embodiments of the invention.

### BRIEF DESCRIPTION OF THE DRAWINGS

Fig. 1 is a flow chart of a portal device management method according to an embodiment of the disclosure;
Fig, 2 is a schematic structural diagram of a portal system according to an embodiment of the disclosure;
Fig. 3 is a first flow chart for implementing portal device management according to an embodiment of the disclosure;
Fig. 4 is a second flow chart for implementing portal device management according to an embodiment of the disclosure; and
Fig. 5 is a third flow chart for implementing portal device management according to an embodiment of the disclosure.

### DETAILED DESCRIPTION

The disclosure will be further elaborated below in combination with accompanying drawings and specific embodiments.

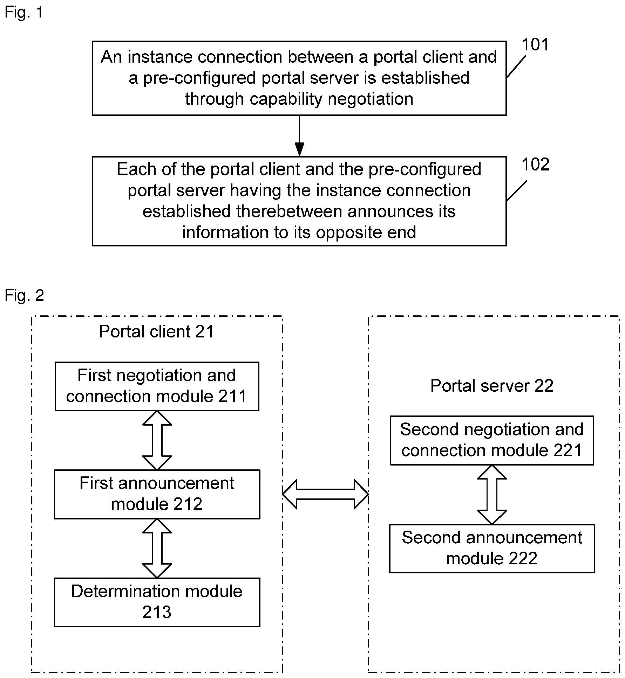

Fig. 1 is a flow chart of a portal device management method according to an embodiment of the disclosure, as shown in Fig. 1, the method includes:
step 101, an instance connection between a portal client and a pre-configured portal server is established through capability negotiation.

The portal client and the portal server are devices that perform network access authentication of a user client, and the network access authentication of the user client can be done through cooperation of the portal server and a portal client supporting the user client.

As a preferred implementation, the step that an instance connection between a portal client and a pre-configured portal server is established through capability negotiation may include: the instance connection between the portal client and the pre-configured portal server is established when the portal client and the pre-configured portal server determine through capability negotiation that a portal protocol version and function required by the portal client match a portal version and function supported by the pre-configured portal server.

As a preferred implementation, the pre-configured portal server having the instance connection established with the portal client is determined as a portal server that performs mandatory authentication of a user client supported by the portal client.

A processing process of network access authentication of the user client performed by the portal client and the determined portal server performing the mandatory authentication complies with portal protocol specifications.

As a preferred implementation, after the instance connection between the portal client and the pre-configured portal server is established through capability negotiation, the instance connection between the portal client and the pre-configured portal server is disconnected when the portal client upgrades its portal protocol, and the instance connection between the portal client and the pre-configured portal server is re-established when the portal client and the pre-configured portal server determine through capability negotiation that a portal protocol version and function required by the portal client after the upgrading match a portal version and function supported by the pre-configured portal server.

Since the portal client and the portal server have their portal protocol versions and functions matching each other before the upgrading may not match each other any more after the upgrading, in order to avoid configuring a portal server not matching the portal client to perform mandatory authentication of the portal client, it is required to disconnect firstly the instance connection between the portal server and the portal client and then re-establish the instance connection after determination of matching.

As a preferred implementation, after the instance connection between the portal client and the pre-configured portal server is established through capability negotiation, the instance connection between the portal client and the pre-configured portal server is disconnected when the pre-configured portal server having the instance connection established with the portal client upgrades its portal protocol and/or function, and the instance connection between the portal client and the pre-configured portal server is re-established when the portal client and the pre-configured portal server determine through capability negotiation that a portal protocol version and function required by the portal client match a portal version and function supported by the pre-configured portal server after the upgrading.

Step 102, each of the portal client and the pre-configured portal server having the instance connection established therebetween announces its information to its opposite end.

As a preferred implementation, the step that each of the portal client and the pre-configured portal server having the instance connection established therebetween announces its information to its opposite end may include: the pre-configured portal server announces its load information to the portal client having the instance connection established with the pre-configured portal server; and the method may further include: the portal client updates the instance connection between the portal client and the pre-configured portal server according to the load information.

If the portal client determines according to load information that a current load of the client server exceeds a preset threshold, the instance connection with the portal server is disconnected temporarily; if subsequently the portal client determines according to the load information announced by the portal server that a current load of the client server doesn't exceed the preset threshold, the temporarily-disconnected instance connection is recovered.

The load information of the portal server may include a description of the number of authentication requests from user clients currently processed by the portal server, and may also include a description of hardware load of the portal server, where the hardware load includes but is not limited to utilization rate of CPU, utilization rate of memory and utilization rate of network bandwidth.

As a preferred implementation, the step that each of the portal client and the pre-configured portal server having the instance connection established therebetween announces its information to its opposite end may include: the portal client announces, to the pre-configured portal server having the instance connection with the portal client, an IP address of the portal client or an IP address pool locally configured at the portal client, and when the IP address of the portal client and/or the IP address pool locally configured at the portal client changes, the portal client announces the changed IP address and/or changed IP address pool to the pre-configured portal server having the instance connection with the portal client; and
the pre-configured portal server announces a URL of its authentication page to the portal client having the instance connection established with the pre-configured portal server, and when the URL of the authentication page changes, announces the changed URL to the portal client having the instance connection established with the pre-configured portal server.

When the portal server and the portal client perform network access authentication of a user client, the portal client needs to announce a URL of an authentication page of the portal server to the user client so as to re-direct the user client to the authentication page of the portal server; the portal server needs to determine, through an IP address of the portal client and information of an IP address pool of the user client which is locally configured at the portal client, an IP address of a portal client supporting the user client, and announces authentication information of the user client acquired through the authentication page to the portal client supporting the user client so that the authentication information of the user client can be verified by the portal client supporting the user client.

As a preferred implementation, the step that each of the portal client and the pre-configured portal server having the instance connection established therebetween announces its information to its opposite end may include: the pre-configured portal server announces a public key of an asymmetric encryption algorithm to the portal client.

It should be noted that the announced information described in the embodiment of the disclosure is not limited to what described herein, each of the portal client and portal server having the instance connection established therebetween can announces, to its opposite end, other information required during subsequent mandatory authentication of a user client, for example, a type of a protocol required during the authentication can be announced between the portal client and the portal server.

Fig, 2 is a schematic structural diagram of a portal system according to an embodiment of the disclosure, as shown in Fig. 2, the system includes a portal client 21 and a pre-configured portal server 22,
the portal client 21 is configured to establish an instance connection with the pre-configured portal server 22 through capability negotiation, and announce its information to the pre-configured portal server 22 having the instance connection established with the portal client 21; and
the pre-configured portal server 22 is configured to establish the instance connection with the portal client 21 through capability negotiation, and announce its information to the portal client 21 having the instance connection established with the pre-configured portal server 22.

The portal client 21 is further configured to establish the instance connection with the pre-configured portal server 22 when determining through capability negotiation with the pre-configured portal server 22 that a portal protocol version and function required by the portal client 21 match a portal version and function supported by the pre-configured portal server 22.

The portal client 21 is further configured to determine the pre-configured portal server 22 having the instance connection established with the portal client 21 as a portal server 22 that performs mandatory authentication of a user client supported by the portal client 21.

The portal client 21 is further configured to disconnect the instance connection with the pre-configured portal server 22 when the portal client 21 upgrades its portal protocol, and re-establish the instance connection with the pre-configured portal server 22 when determining through capability negotiation with the pre-configured portal server 22 that a portal protocol version and function required by the portal client 21 after the upgrading match a portal version and function supported by the pre-configured portal server 22.

The portal client 21 is further configured to update the instance connection with the pre-configured portal server 22 according to load information announced by the pre-configured portal server 22 having the instance connection established with the first negotiation and connection module 221.

The portal client 21 is further configured to announce an IP address of the portal client 21 and an IP address pool locally configured at the portal client to the pre-configured portal server 22 having the instance connection established with the portal client 21, and when the IP address of the portal client 21 and/or the IP address pool locally configured at the portal client change(s), announce the changed IP address and/or changed IP address pool to the pre-configured portal server 22 having the instance connection established with the portal client 21.

The pre-configured portal server 22 is further configured to establish the instance connection with the portal client 21 when determining through capability negotiation with the portal client 21 that a portal protocol version and function required by the portal client 21 match a portal version and function supported by the portal server 22.

The pre-configured portal server is further configured to disconnect the instance connection with the portal client 21 when the portal server 22 upgrades its portal protocol and/or function, and re-establish the instance connection with the portal client 21 when determining through capability negotiation with the portal client 21 that a portal protocol version and function required by the portal client 21 match a portal version and function supported by the portal server 22 after the upgrading.

The pre-configured portal server 22 is further configured to announce its load information to the portal client 21 having the instance connection established with the portal server 22.

The pre-configured portal server 22 is further configured to announce a Uniform Resource Locator (URL) of an authentication page of the portal server 22 to the portal client 21 having the instance connection established with the portal server 22, and when the URL of the authentication page changes, announce the changed URL to the portal client 21 having the instance connection established with the portal server 22.

The pre-configured portal server is further configured to announce a public key of an asymmetric encryption algorithm to the portal client 21 having the instance connection established with the pre-configured portal server 22.

The portal client 21 includes a first negotiation and connection module 211 and a first announcement module 212,
the first negotiation and connection module 211 is configured to establish an instance connection with a pre-configured portal server 22 through capability negotiation; and
the first announcement module 212 is configured to announce information of the portal client 21 to the pre-configured portal server having the instance connection established with the first negotiation and connection module 211.

Specifically, the first negotiation and connection module 211 is further configured to establish the instance connection with the pre-configured portal server 22 when determining through capability negotiation with the pre-configured portal server 22 that a portal protocol version and function required by the portal client 21 match a portal version and function supported by the pre-configured portal server 22.

In an embodiment, the portal client 21 further include a determination module 213 configured to determine the pre-configured portal server 22 having the instance connection established with the first negotiation and connection module 211 as a portal server 22 that performs mandatory authentication of a user client supported by the portal client 21.

The first negotiation and connection module 211 is further configured to disconnect the instance connection with the pre-configured portal server 22 when the portal client 21 upgrades its portal protocol, and re-establish the instance connection with the pre-configured portal server 22 when determining through capability negotiation with the pre-configured portal server 22 that a portal protocol version and function required by the portal client 21 after the upgrading match a portal version and function supported by the pre-configured portal server 22.

The first negotiation and connection module 211 is further configured to update the instance connection with the pre-configured portal server 22 according to load information announced by the pre-configured portal server 22 having the instance connection established with the first negotiation and connection module 211.

The first announcement module 212 is further configured to announce an IP address of the portal client 21 and an IP address pool locally configured at the portal client 21 to the pre-configured portal server 22 having the instance connection established with the first negotiation and connection module 211, and when the IP address of the portal client 21 and/or the IP address pool locally configured at the portal client 21 change(s), announce the changed IP address and/or changed IP address pool to the pre-configured portal server 22 having the instance connection established with the first negotiation and connection module 211.

In practical applications, the first negotiation and connection module 211, the first announcement module 212 and the determination module 213 can all be implemented by a Central Processing Unit (CPU), a Digital Signal Processor (DSP) or a Field-Programmable Gate Array (FPGA) in the portal client 21.

The portal server 22 includes a second negotiation and connection module 221 and a second announcement module 222,
the second negotiation and connection module 221 is configured to establish an instance connection with a portal client 21 through capability negotiation; and
the second announcement module 222 is configured to announce information of the portal server 22 to the portal client 21 having the instance connection established with the second negotiation and connection module 221.

The second negotiation and connection module 221 is further configured to establish the instance connection with the portal client 21 when determining through capability negotiation with the portal client 21 that a portal protocol version and function required by the portal client 21 match a portal version and function supported by the portal server 22.

The second negotiation and connection module 221 is further configured to disconnect the instance connection with the portal client 21 when the portal server 22 upgrades its portal protocol and/or function, and re-establish the instance connection with the portal client 21 when determining through capability negotiation with the portal client 21 that a portal protocol version and function required by the portal client 21 match a portal version and function supported by the portal server 22 after the upgrading.

The second announcement module 222 is configured to announce load information of the portal server 22 to the portal client 21 having the instance connection established with the portal server 22.

The second announcement module 222 is further configured to announce a Uniform Resource Locator (URL) of an authentication page of the portal server 22 to the portal client 21 having the instance connection established with the portal server 22, and when the URL of the authentication page changes, announce the changed URL to the portal client 21 having the instance connection established with the portal server 22.

The second announcement module 222 is further configured to announce a public key of an asymmetric encryption algorithm to the portal client 21 having the instance connection established with the portal server 22.

In practical applications, the second negotiation and connection module 221 and the second announcement module 222 can both be implemented by a CPU, DSP or FPGA in the portal server 22.

In below embodiments, since a type of interactive message (the message type value is from 0x1 to 0x10) between a portal client and a portal server defined by existing portal protocols cannot meet requirements from interaction between the portal client and the portal server according to embodiments of the disclosure, it is required to extend the type of message defined by the existing portal protocols. For example, it can be extended to types of messages as follows.

REQ_JOIN message with its value being 0x11: when requesting to join the portal server, the portal client transmits a REQ_JOIN message to the portal server, wherein the REQ_JOIN message carries a c and function required by the portal client, and after receiving the message, the portal server determines whether a portal protocol version and function supported by the portal server match the portal protocol version and function required by the portal client (hereinafter the matching of the portal protocol version and function supported by the portal server and the portal protocol and function required by the portal client is referred simply as the matching of the portal server and the portal client); the REQ_JOIN message includes a capability parameter field with variable field length configured to carry information regarding the portal protocol version and function required by the portal client, and the capability parameter field is organized according to a Type length Value (TLV) format;
ACK_JOIN message with its value being 0x12: after receiving the REQ_JOIN message and determining a matching result, the portal server carries the matching result in an ACK_JOIN message and transmits the ACK_JOIN message to the portal client, if an ErrCode field of the ACK_JOIN message is 0, it indicates that the portal server matches the portal client requesting to join therein, and if the ErrCode field of the ACK_JOIN message is 1, it indicates that the portal server doesn't match the portal client requesting to join therein; the ACK_JOIN message may further include an authentication method (Authen-Method) field with its length being 1 bit, for example, a value of the field being 0, 1 or 2 indicates that protocols used during authentication performed by the portal server and the portal client are respectively a Challenge Handshake Authentication Protocol (CHAP), a Password Authentication Protocol (PAP) or an Extensible Authentication Protocol (EAP);
REQ_CONFIG message with its value being 0x13: when the portal client receives the ACK_JOIN message, if an ErrCode field of the message is 0, a REQCONFIG message is transmitted to the portal server transmitting the ACK_JOIN message to request for a URL of an authentication page of the portal server;
ACK_CONFIG with its value being 0x14: when receiving the REQCONFIG message transmitted from the portal client, the portal server returns, to the portal client, the URL of the authentication page of the portal server, wherein the ACK_CONFIG message include a URL field carrying the URL of the authentication page of the portal server; and the URL field is organized according to the TLV format;
INFO_NOTIFY message with its value being 0x15: when receiving an ACK_JOIN message with its ErrCode field being 0, the portal client transmits an INFO_NOTIFY message to the portal server transmitting the ACK_JOIN message, the INFO_notify message carries an IP address of the portal client and an IP address pool locally configured at the portal client, and when the IP address of the portal client and/or the IP address pool locally configured at the portal client change(s), the portal client transmits, to the portal server transmitting the ACK_JOIN message, an INFO_NOTIFY message carrying the changed IP address of the portal client and/or the changed IP address pool locally configured at the portal client; after the portal server transmits an ACK_CONFIG with its Errcode field being 0 to the portal client and when the URL of the authentication page of the portal server changes, the portal server carries the changed URL in the INFO_NOTIFY message and transmits the INFO_NOTIFY message to the portal client, wherein the ACK_CONFIG message includes a URL field carrying a URL of the authentication page of the portal server. The URL field is organized according to the TLV format; the portal server carries load information in the INFO_NOTIFY message and transmits the INFO_NOTIFY message to a portal client matching the portal server;
wherein a server state (Server-State) field of the INFO_NOTIFY message carries the load information of the portal server, for example, it is defined as an idle state when the load of the portal server is smaller than a preset threshold, and defined as a busy state when the load of the portal server is not smaller than the preset threshold, and below convention can be made to the Server-State field: when the Server-State field is binary 1, it indicates that the portal server is in the busy state, when the Server-State field is binary 0, it indicates that the portal server is in the idle state; after the portal server upgrades its portal protocol and/or function and then it matches a portal client which doesn't match the portal server before the upgrading, the portal server carries information that it matches the portal client in the INFO_NOTIFY message and then transmits the INFO_NOTIFY message to the portal client;
ACK_INFO_NOTIFY message with its value being 0x16: when receiving the INFO_NOTIFY message, the portal client returns an ACK_INFO_NOTIFY message to the portal server transmitting the INFO_NOFITY message to acknowledge that the URL of the portal server has been updated; when receiving the INFO_NOTIFY message, the portal server returns the CK_INFO_NOTIFY to the portal client transmitting the INFO_NOTIFY message to acknowledge that the IP address of the portal client and/or the IP address pool locally configured at the portal client have been saved; when receiving an INFO_NOTIFY message carrying the load information of the portal server, the portal client returns the ACK_INFO_NOTIFY message to the portal client server transmitting the INFO_NOTIFY message to acknowledge that the established instance connection has been updated;
FORCE_LEAVE message with its value being 0x17: when upgrading its portal protocol and/or function, the portal server transmits a FORCE_LEAVE message to a portal client matching the portal server to forcibly separate from the management of the portal client;
ACK_FORCE_LEAVE message with its value being 0x18: when receiving the FORCE_LEAVE message transmitted from the portal server matching the portal client, the portal client cancels labeling the portal server as a portal server matching the portal client, and transmits an ACK_FORCE_LEAVE message to the portal server to announces that it has separated from the management of the portal server;
REQ_LEAVE message with its value being 0x18: when upgrading its portal protocol, the portal client transmits a REQ_LEAVE message to the portal server matching the portal client to request for separation from management of the portal server;
ACK_LEAVE message with its value being 0x1a: when receiving the REQ_LEAVE message transmitted from the portal client matching the portal server, the portal server labels the portal client as a portal client not matching the portal server, and transmits an ACK_LEAVE message to the portal client to announce that the portal client has separated from management.

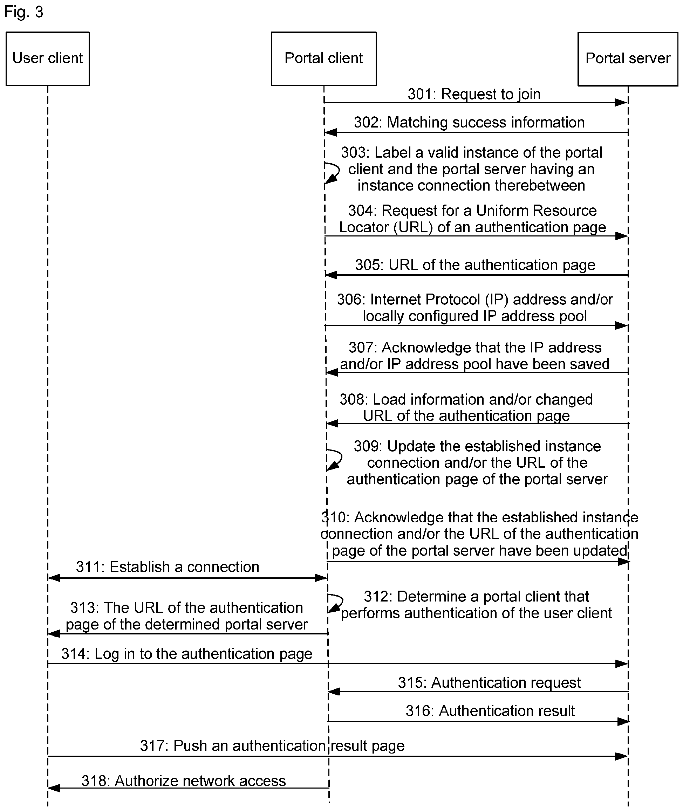

In a preferred embodiment of the disclosure, when a portal protocol version and function supported by a portal server match a portal protocol version and function required by a portal client, the portal client establishes an instance connection with the portal server; the portal client announces an IP address of the portal client and an IP address pool locally configured at the portal client to the portal server having the instance connection established with the portal client, and requests the portal sever for a URL of an authentication page of the portal server; the portal client re-directs, a user client that has logged in, to the authentication page of the portal server having the instance connection established with the portal client so that the portal server acquires authentication information of the user client and network access authentication of the user client is performed according to the authentication information returned by the portal server. Fig. 3 is a first flow chart of a device management method according to an embodiment of the disclosure, as shown in Fig. 3, the method includes:
step 301, a portal client requests to join a portal server.

The portal server that the portal client requests to join is a portal server pre-configured to perform network access authentication of the portal client, and there are one or more such portal servers;
the portal client transmits a REQ_JOIN message to the portal server to request to join the portal server, wherein the message carries information regarding a portal protocol version and function required by the portal client.

Step 302, the portal server returns a matching result to the portal client.

The portal server determines, according to received information regarding a portal protocol version and function required by the portal client carried in the REQ_JOIN message, whether a portal protocol version and function supported by the portal server match those required by the portal client, if yes, the portal server returns, to the portal client, an ACK_JOIN message with its ErrCode field being 0; otherwise, the portal server returns, to the portal client, an ACK_JOIN message with its Errcode field being 1.

The above steps 301 and 302 are a processing process of establishing an instance connection between the portal client and the portal server through capability negotiation.

Step 303, the portal client labels a valid instance of the portal client and the portal server having an instance connection therebetween.

The portal client records the currently established instance connection by labeling a valid instance, when the portal server returns the ACK_JOIN message with its ErrCode field being 0 to the portal client, it represents that the portal server returning the ACK_JOIN message matches the portal client and the portal client and the portal server has established the instance connection therebetween; accordingly, the portal client labels a valid instance of the portal server including the portal client and returning the CK_JOIN message.

The processing of steps 301 to 303 can be exemplified as below: when a portal client B requests to join a portal server A₁ and a portal server A₂, if the portal server A₁ returns an ACK_JOIN message with its ErrCode field being 0, it represents that the portal server A₁ and the portal client B establish an instance connection through capability negotiation, and then the portal client B sets a valid instance <portal client B, portal server A₁>.

Step 304, the portal client requests the portal server having the instance connection established with the portal client for a URL of an authentication page.

The portal client transmits an REQ_CONFIG message to a portal server in the set valid instance so as to request for URL information of the authentication page of the portal server.

Step 305, the portal server returns the URL of the authentication page to the portal client;
the portal server carries the URL information of the authentication page in the ACK_CONFIG message and returns the message to the portal server.

Step 306, the portal client announces, to the portal server having the instance connection with the portal client, an IP address of the portal client and/or an IP address pool locally configured at the portal client;
the portal client carries the announced information in an INFO_NOTIFY message and transmits the message to a portal server in the set valid instance.

It should be noted that steps 304 and 306 implemented by the portal client can be swapped.

Step 307, the portal server acknowledges that the IP address of the portal client and the IP address pool locally configured at the portal client have been saved.

The portal server acknowledges, through transmitting the INFO_NOTIFY message, that the information announced by the portal client has been saved.

Step 308, the portal server announces load information and/or a changed URL of the authentication page to the portal client having the instance connection established with the configured portal server.

The information announced by the portal server is carried in the INFO_NOTIFY message transmitted to the portal client having the instance connection established with the portal server.

Step 309, the portal client updates the established instance connection and/or the URL of the authentication page of the portal server.

If in step 308 the portal server announces that it is in a busy state, the portal client having the instance connection established with the portal server in this step is disconnected temporarily; accordingly, if the portal client receives subsequently an INFO_NOTIFY message announcing that the portal server is in an idle state, the temporarily-disconnected instance connection is recovered; if in step 308 the portal server announces a changed URL of the authentication page of the portal server, the portal client having the instance connection established with the portal server in this step updates its saved URL of the authentication page of the portal server.

Step 310, the portal client acknowledges that the established instance connection and/or the URL of the authentication page of the portal server have been updated.

The portal client carries the acknowledge information in an ACK_INFO_NOTIFY message and transmits the message to a portal server matching the portal client.

Step 311, a user client and the portal client establishes a connection therebetween.

The user client and the portal client interact with each other according to specifications of Transmission Control Protocol/Internet Protocol (TCP/IP) to establish the connection.

Step 312, the portal client determines the portal server having the instance connection established with the portal client as a portal server that performs mandatory authentication of the user client.

The portal server having the instance connection established with the portal client is in an idle state, thus the portal server determines a portal server in a currently labeled valid instance as the portal server that performs mandatory authentication of the user client.

Step 313, the portal client announces a URL of an authentication page of the determined portal server to the portal client.

The user client logs in to an authentication page of the portal server corresponding to the announced URL, the portal server acquires, through the authentication page, authentication information of the user client, which includes a user name and a password.

Step 314, the portal client logs in to the authentication page of the portal server according to the URL.

Step 315, the portal server transmits an authentication request to a portal client supporting the user client.

The authentication request carries the authentication information of the user client which is acquired from the authentication page by the user client.

The portal server queries the saved IP address of the portal client and the saved IP address pool locally configured at the portal client by being indexed by an IP address of the user client to determine an IP address of a portal client supporting the user client and to transmit, according to the IP address, the authentication request to the portal client supporting the user client.

Step 316, the portal client returns an authentication result to the portal server.

The portal client performs network access authentication of the user client according to the authentication information that is carried in the authentication request message and includes the user name and password of the user client.

Step 317, the portal server pushes an authentication result page to the user client.

If in step 316 the portal client returns authentication success information, the portal server pushes an authentication success page, then proceed to step 317; otherwise, the portal server pushes an authentication failure page and then the processing ends.

Step 318, the portal client authorizes the user client to get network access.

In a preferred embodiment of the disclosure, when a portal client doesn't match a portal client request to join therein, the portal server stores a portal protocol version and function required by the portal client; when the portal server upgrades its portal protocol and/or function, it forcibly separates from a portal client matching the portal server to disconnect an instance connection, the portal server and portal client having the instance connection therebetween disconnected perform capability negotiation so that after the upgrading the portal server determines whether it match the portal client having its instance connection disconnected, and the instance connection is re-established when the two match; when the upgraded portal server determines, according to the saved portal protocol version and function required by the non-matching portal client before the upgrading, that it matches the portal client that the portal server doesn't match before the upgrading, the portal server announces the matching to the portal client to establish an instance connection with the portal client.

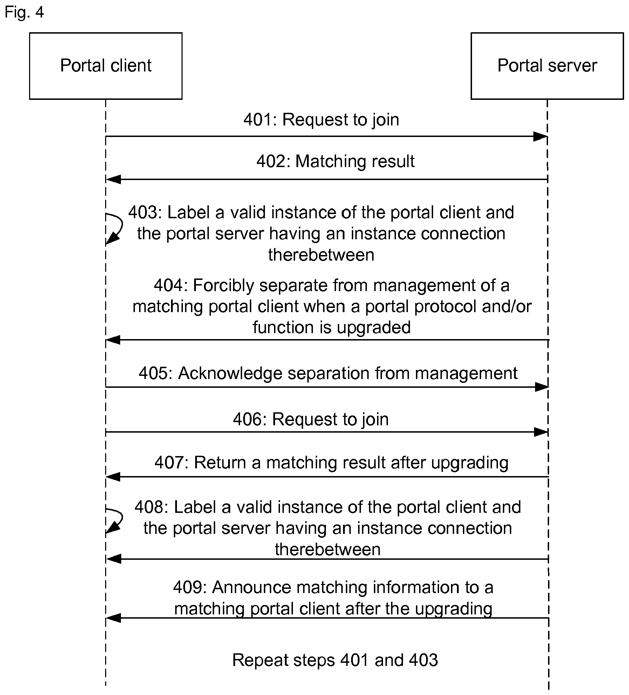

Fig. 4 is a second flow chart of a device management method according to an embodiment of the disclosure, as shown in Fig. 4, the method includes:
step 401, a portal client requests to join a portal server.

The portal server that the portal client requests to join is a portal server pre-configured to perform network access authentication of the portal client.
the portal client transmits a REQ_JOIN message to the portal server to request to join the portal server, wherein the message carries information regarding a portal protocol version and function required by the portal client.

Step 402, the portal server returns a matching result to the portal client.

The portal server determines, according to received information regarding a portal protocol version and function required by the portal client carried in the REQ_JOIN message, whether the portal server matches the portal client, if yes, the portal server transmits, to the portal client, an ACK_JOIN message with its ErrCode field being 0 to return matching success information; otherwise, the portal server transmits, to the portal client, an ACK_JOIN message with its ErrCode field being 1 to return non-matching information, and saves a portal protocol version and function required by a non-matching portal client.

The above steps 401 and 402 are a processing process of establishing an instance connection between the portal client and the portal server through capability negotiation.

Step 403, the portal client labels a valid instance between the portal client and the portal server having the instance connection therebetween.

The portal client records the currently established instance connection by labeling a valid instance, the processing of steps 401 to 403 can be exemplified as below: a portal client B requests to join a portal server A₁ and a portal server A₂, in step 402 the portal server A₁ returns matching success information and the portal server A₂ returns non-matching information, then the portal client B sets a valid instance <portal client B, portal server A₁>.

Step 404, when the portal server upgrades its portal protocol and/or function, the portal server forcibly separates from management of a matching portal client.

The portal server requests to forcibly separate from the management of the portal client through transmitting a FORCE_LEAVE to the matching portal client so as to disconnect the instance connection with the portal client.

Step 405, the portal client acknowledges that the portal server has separated from its management.

When receiving the FORCE_LEAVE message, the portal client cancels setting a valid instance including the portal server transmitting the FORCE_LEAVE message, and returns an ACK_FORCE_LEAVE message to the portal server to announce that the portal server has separated from its management.

The processing of steps 401 to 403 is exemplified as below: when upgrading its portal protocol and/or function, a portal server A₁ transmits a FORCE_LEAVE message to its matching portal client B, the portal client B cancels its set valid instance <portal client B, portal server A₁>, and returns an ACK_FORCE_LEAVE message to the portal server A₁ to announce that the portal server A₁ has separated from its management.

Step 406, the portal client requests to join a portal server upgrading its portal protocol and/or function.

The portal client periodically transmits a REQ_JOIN message to the portal server that have separated from its management to request to re-join.

Step 407, the portal server after completing its portal protocol and/or function upgrading returns matching result information to a portal client requesting to join.

The portal server determines after upgrading its portal protocol and/or function whether the updated portal protocol and/or function match a portal protocol and function required by the portal client requesting to join, if yes, the portal server transmits, to the portal client, an ACK_JOIN message with its ErrCode field being 0 to return matching success information, and proceed to step 408; otherwise, the portal server transmits, to the portal client, an ACK_JOIN message with its ErrCode field being 1 to return non-matching information, stores a portal protocol version and function required by a non-matching portal client, and ends the processing.

The above steps 406 and 407 are a processing process of performing capability negotiation by the portal client and the portal server having their instance connection disconnected.

Step 408, the portal client labels a valid instance of the portal client and the portal server having the instance connection therebetween.

The processing of steps 406 to 408 can be exemplified as below: when a portal client B requests to re-join a portal server A₁ that has forcibly separated from its management in step405, if the portal server A₁ returns matching success information to the portal client B, it represents that the portal server A₁ and the portal client B establish an instance connection through capability negotiation, and then the portal client B sets a valid instance <portal client B, portal server A₁>.

Step 409, the portal server after the portal protocol and/or function upgrading announces matching information to its matching portal client.

When the portal server determines, according to a portal protocol version and function required by the non-matching portal client before the upgrading and stored in step 402, determines that the portal server after the upgrading matches a portal server that doesn't match it before the upgrading, the portal server transmits an INFO_NOTIFY message to the portal client to announce that the portal server matches the portal client, and when the portal client receives the INFO_NOTIFY message and determines that the portal server matches the portal client, the portal client performs capability negotiation to establish an instance connection, and the specific processing process is the same as steps 401 to 403.

In a preferred embodiment of the disclosure, when upgrading its portal protocol, a portal client requests to separate from management of a portal server matching the portal client to disconnect an instance connection, and performs capability negotiation after the upgrading; when an IP address of the portal client and an IP address pool locally configured at the portal client changes, a portal server matching the portal client updates, according to an announcement from the portal client, a saved IP address of the portal client and saved IP address pool locally configured at the portal client.

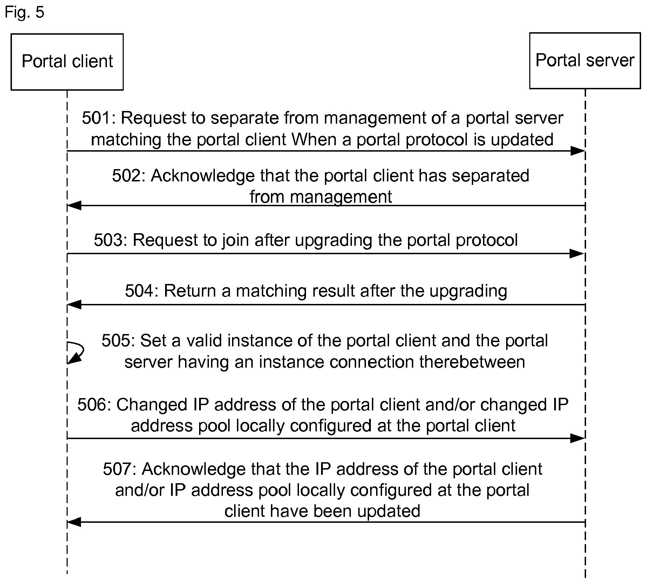

Fig. 5 is a flow chart of a device management method according to an embodiment of the disclosure, as shown in Fig. 5, the method includes:
step 501, when upgrading its portal protocol, a portal client requests to separate from management of a portal server matching the portal client.

When upgrading its portal protocol, the portal client cancels a set valid instance, transmits an ASK_LEAVE message to a portal server included in the canceled valid instance, and requests for separation from the management of the portal server so as to disconnect an instance connection with the portal client.

Step 502, the portal server matching the portal client acknowledges that the portal client has separated from its management.

When receiving the ASK_LEAVE message, the portal server labels the portal client as a non-matching portal client, and transmits an ACK LEAVE message to the portal client to announce that the portal client has separated from its management.
step 503, a portal client after the portal protocol upgrading requests to join a portal server.

The portal server that the portal client requests to join is a portal server pre-configured to perform network access authentication of the portal client.
the portal client transmits a REQ_JOIN message to the portal server, wherein the message carries information regarding a portal protocol version and function required by the portal client.

Step 504, the portal server returns a matching result to the portal client after the upgrading that requests to join.

The portal server determines, according to received information regarding a required portal protocol version and function carried in the REQ_JOIN message, whether the portal server matches the portal client, if yes, the portal server transmits, to the portal client, an ACK_JOIN message with its ErrCode field being 0 to return matching success information; otherwise, the portal server transmits, to the portal client, an ACK_JOIN message with its ErrCode field being 1 to return non-matching information, and saves a portal protocol version and function required by a non-matching portal client.

The above steps 503 and 504 are a processing process of performing capability negotiation by the portal client and the portal server having their instance connection disconnected.

Step 505, the portal client after the upgrading sets a valid instance between the portal client and the portal server having the instance connection therebetween.

The portal client records the currently established instance connection by labeling a valid instance, when the portal client after the upgrading receives an ACK_JOIN message with its ErrCode field being 0 returned by the portal server, it represents that the portal server returning the ACK_JOIN message matches the portal client after the upgrading, and then the portal client after the upgrading sets a valid instance of the portal server including the portal client and returning the CK_JOIN message.

For example, a portal client B after the upgrading requests to join a portal server A₁ and a portal server A₂, if the portal server A₁ returns an ACK_JOIN message with its ErrCode field being 0, it represents that the portal server A₁ and the portal client B establish an instance connection through capability negotiation, and then the portal client B sets a valid instance <portal client B, portal server A₁>.

Step 506, when an IP address of the portal client and/or an IP address pool locally configured at the portal client, the portal client announces the changed IP address of the portal client and/or the changed IP address pool locally configured at the portal client to the portal server having the instance connection established with the portal client.

The changed IP address of the portal client and/or the changed IP address pool locally configured at the portal client are carried in an INFO_NOTIFY message.

Step 507, the portal server acknowledges that the IP address of the portal client and the IP address pool locally configured at the portal client have been updated.

The portal server receives the IP address of the portal client and/or the IP address pool locally configured at the portal client, which are carried in the INFO_NOTIFY message, updates its stored IP address of the portal client and/or IP address pool locally configured at the portal client, and returns an ACK_INFO_NOTIFY to acknowledge that the IP address and IP address pool have been updated.

What described are merely preferable embodiments of the disclosure, and are not intended to limit the disclosure.

## Claims

1. A portal device management method, comprising:
establishing an instance connection between a portal client and a pre-configured portal server through capability negotiation;
announcing, by each of the portal client and the pre-configured portal server having the instance connection established therebetween, its information to its opposite end; wherein the announcing, by each of the portal client and the pre-configured portal server having the instance connection established therebetween, its information to its opposite end comprises: announcing, by the pre-configured portal server, its load information to the portal client having the instance connection established with the pre-configured portal server; and
updating, by the portal client, the instance connection between the portal client and the pre-configured portal server according to the load information, wherein the updating comprises: if the portal client determines according to the load information that a current load of the portal server exceeds a preset threshold, the instance connection with the portal server is disconnected temporarily; if the portal client determines according to the load information that the current load of the portal server does not exceed the preset threshold, a temporarily-disconnected instance connection is recovered.

2. The method according to claim 1, wherein the establishing an instance connection between a portal client and a pre-configured portal server through capability negotiation comprises:
establishing the instance connection between the portal client and the pre-configured portal server when the portal client and the pre-configured portal server determine through capability negotiation that a portal protocol version and function required by the portal client match a portal version and function supported by the pre-configured portal server.

3. The method according to claim 1, further comprising: after the establishing an instance connection between a portal client and a pre-configured portal server through capability negotiation,
disconnecting the instance connection between the portal client and the pre-configured portal server when the portal client upgrades its portal protocol, and re-establishing the instance connection between the portal client and the pre-configured portal server when the portal client and the pre-configured portal server determine through capability negotiation that a portal protocol version and function required by the portal client after the upgrading match a portal version and function supported by the pre-configured portal server.

4. The method according to claim 1, further comprising: after the establishing an instance connection between a portal client and a pre-configured portal server through capability negotiation,
disconnecting the instance connection between the portal client and the pre-configured portal server when the pre-configured portal server having the instance connection established with the portal client upgrades its portal protocol and/or function, and re-establishing the instance connection between the portal client and the pre-configured portal server when the portal client and the pre-configured portal server determine through capability negotiation that a portal protocol version and function required by the portal client match a portal version and function supported by the pre-configured portal server after the upgrading.

5. A portal client comprising a first negotiation and connection module and a first announcement module,
wherein the first negotiation and connection module is configured to establish an instance connection with a pre-configured portal server through capability negotiation; and
wherein the first announcement module is configured to announce information of the portal client to the pre-configured portal server having the instance connection established with the first negotiation and connection module, and wherein, the first negotiation and connection module is configured to disconnect the instance connection between the portal client and the portal server when the portal client determines according to the load information announced by the pre-configured portal server having the instance connection established with the first negotiation and connection module, that a current load of the portal server exceeds a preset threshold, and recover a temporarily-disconnected instances connection when the portal client determines according to the load information that the current load of the portal server does not exceed the preset threshold.

6. The portal client according to claim 5, wherein
the first negotiation and connection module is further configured to establish the instance connection with the pre-configured portal server when determining through capability negotiation with the pre-configured portal server that a portal protocol version and function required by the portal client match a portal version and function supported by the pre-configured portal server.

7. The portal client according to claim 5, wherein
the first negotiation and connection module is further configured to disconnect the instance connection with the pre-configured portal server when the portal client upgrades its portal protocol, and re-establish the instance connection with the pre-configured portal server when determining through capability negotiation with the pre-configured portal server that a portal protocol version and function required by the portal client after the upgrading match a portal version and function supported by the pre-configured portal server.

8. A portal system comprising a pre-configured portal client according to any of claims 5-7 and a portal server,
wherein the pre-configured portal server is configured to establish an instance connection with the portal client through capability negotiation, and announce its information to the portal client having the instance connection established with the pre-configured portal server, wherein the pre-configured portal server is configured to announce load information of the portal server to the portal client having the instance connection established with the portal server; and
wherein the portal client is configured to establish the instance connection with the pre-configured portal server through capability negotiation, and announce its information to the pre-configured portal server having the instance connection established with the portal client, wherein the portal client is configured to disconnect the instance connection between the portal client and the portal server when the portal client determines according to the load information announced by the pre-configured portal server having the instance connection established with the first negotiation and connection module, that a current load of the portal server exceeds a preset threshold, and recover a temporarily-disconnected instances connection when the portal client determines according to the load information that the current load of the portal server does not exceed the preset threshold.

9. The portal system according to claim 8, wherein the portal server comprising a second negotiation and connection module and a second announcement module,
wherein the second negotiation and connection module is configured to establish an instance connection with a portal client through capability negotiation; and
wherein the second announcement module is configured to announce information of the portal server to the portal client having the instance connection established with the second negotiation and connection module, wherein the second announcement module is configured to announce load information of the portal server to the portal client having the instance connection established with the portal server.

10. The portal system according to claim 9, wherein
the second negotiation and connection module is further configured to establish the instance connection with the portal client when determining through capability negotiation with the portal client that a portal protocol version and function required by the portal client match a portal version and function supported by the portal server; or
the second negotiation and connection module is further configured to disconnect the instance connection with the portal client when the portal server upgrades its portal protocol and/or function, and re-establish the instance connection with the portal client when determining through capability negotiation with the portal client that a portal protocol version and function required by the portal client match a portal version and function supported by the portal server after the upgrading.

## Patentansprüche

1. Verfahren zur Verwaltung einer Portalvorrichtung, umfassend:
Herstellen einer Instanzverbindung zwischen einem Portal-Client und einem vorkonfigurierten Portalserver durch Funktionsaushandlung (Capability Negotiation),
Bekanntgeben durch jeweils den Portal-Client und den vorkonfigurierten Portalserver, zwischen denen die Instanzverbindung hergestellt ist, ihrer Informationen gegenüber ihrem entgegengesetzten Ende, wobei das Bekanntgeben durch jeweils den Portal-Client und den vorkonfigurierten Portalserver, zwischen denen die Instanzverbindung hergestellt ist, ihrer Informationen gegenüber ihrem entgegengesetzten Ende Folgendes umfasst: Bekanntgeben durch den vorkonfigurierten Portalserver seiner Lastinformationen gegenüber dem Portal-Client, der die mit dem vorkonfigurierten Portalserver hergestellte Instanzverbindung hat, und
Aktualisieren der Instanzverbindung zwischen dem Portal-Client und dem vorkonfigurierten Portalserver gemäß den Lastinformationen durch den Portal-Client, wobei das Aktualisieren Folgendes umfasst: wenn der Portal-Client gemäß den Lastinformationen bestimmt, dass eine aktuelle Last des Portalservers einen voreingestellten Schwellenwert übersteigt, wird die Instanzverbindung mit dem Portalserver zeitweilig unterbrochen, wenn der Portal-Client gemäß den Lastinformationen bestimmt, dass die aktuelle Last des Portalservers den voreingestellten Schwellenwert nicht übersteigt, wird eine zeitweilig unterbrochene Instanzverbindung wiederhergestellt.

2. Verfahren nach Anspruch 1, wobei das Herstellen einer Instanzverbindung zwischen einem Portal-Client und einem vorkonfigurierten Portalserver durch Funktionsaushandlung Folgendes umfasst:
Herstellen der Instanzverbindung zwischen dem Portal-Client und dem vorkonfigurierten Portalserver, wenn der Portal-Client und der vorkonfigurierte Portalserver durch Funktionsaushandlung bestimmen, dass eine von dem Portal-Client benötigte Portalprotokollversion und Funktion mit einer Portalversion und Funktion übereinstimmen, die von dem vorkonfigurierten Portalserver unterstützt werden.

3. Verfahren nach Anspruch 1, ferner Folgendes umfassend: nach dem Herstellen einer Instanzverbindung zwischen einem Portal-Client und einem vorkonfigurierten Portalserver durch Funktionsaushandlung:
Unterbrechen der Instanzverbindung zwischen dem Portal-Client und dem vorkonfigurierten Portalserver, wenn der Portal-Client sein Portalprotokoll aktualisiert, und erneutes Herstellen der Instanzverbindung zwischen dem Portal-Client und dem vorkonfigurierten Portalserver, wenn der Portal-Client und der vorkonfigurierte Portalserver durch Funktionsaushandlung bestimmen, dass eine von dem Portal-Client benötigte Portalprotokollversion und Funktion nach der Aktualisierung mit einer Portalversion und Funktion übereinstimmen, die von dem vorkonfigurierten Portalserver unterstützt werden.

4. Verfahren nach Anspruch 1, ferner Folgendes umfassend: nach dem Herstellen einer Instanzverbindung zwischen einem Portal-Client und einem vorkonfigurierten Portalserver durch Funktionsaushandlung:
Unterbrechen der Instanzverbindung zwischen dem Portal-Client und dem vorkonfigurierten Portalserver, wenn der vorkonfigurierte Portalserver, der die mit dem Portal-Client hergestellte Instanzverbindung hat, sein Portalprotokoll und/oder seine Funktion aktualisiert, und erneutes Herstellen der Instanzverbindung zwischen dem Portal-Client und dem vorkonfigurierten Portalserver, wenn der Portal-Client und der vorkonfigurierte Portalserver durch Funktionsaushandlung bestimmen, dass eine von dem Portal-Client benötigte Portalprotokollversion und Funktion nach der Aktualisierung mit einer Portalversion und Funktion übereinstimmen, die von dem vorkonfigurierten Portalserver unterstützt werden.

5. Portal-Client, der ein erstes Aushandlungs- und Verbindungsmodul und ein erstes Bekanntgabemodul umfasst,
wobei das erste Aushandlungs- und Verbindungsmodul dafür konfiguriert ist, durch Funktionsaushandlung eine Instanzverbindung mit einem vorkonfigurierten Portalserver herzustellen, und
wobei das erste Bekanntgabemodul dafür konfiguriert ist, Informationen des Portal-Client gegenüber dem vorkonfigurierten Portalserver, der die mit dem ersten Aushandlungs- und Verbindungsmodul hergestellte Instanzverbindung hat, bekanntzugeben und wobei das erste Aushandlungs- und Verbindungsmodul dafür konfiguriert ist, die Instanzverbindung zwischen dem Portal-Client und dem Portalserver zu unterbrechen, wenn der Portal-Client gemäß den Lastinformationen, die von dem vorkonfigurierten Portalserver bekanntgegeben wurden, der die mit dem ersten Aushandlungs- und Verbindungsmodul hergestellte Instanzverbindung hat, bestimmt, dass eine aktuelle Last des Portalservers einen voreingestellten Schwellenwert übersteigt, und eine zeitweilig unterbrochene Instanzverbindung wiederherzustellen, wenn der Portal-Client gemäß den Lastinformationen bestimmt, dass die aktuelle Last des Portalserver den voreingestellten Schwellenwert nicht übersteigt.

6. Portal-Client nach Anspruch 5, wobei
das erste Aushandlungs- und Verbindungsmodul ferner dafür konfiguriert ist, die Instanzverbindung mit dem vorkonfigurierten Portalserver herzustellen, wenn durch Funktionsaushandlung mit dem vorkonfigurierten Portalserver bestimmt wird, dass eine von dem Portal-Client benötigte Portalprotokollversion und Funktion mit einer Portalversion und Funktion übereinstimmen, die von dem vorkonfigurierten Portalserver unterstützt werden.

7. Portal-Client nach Anspruch 5, wobei
das erste Aushandlungs- und Verbindungsmodul ferner dafür konfiguriert ist, die Instanzverbindung mit dem vorkonfigurierten Portalserver zu unterbrechen, wenn der Portal-Client sein Portalprotokoll aktualisiert, und die Instanzverbindung mit dem vorkonfigurierten Portalserver erneut herzustellen, wenn durch Funktionsaushandlung mit dem vorkonfigurierten Portalserver bestimmt wird, dass eine von dem Portal-Client benötigte Portalprotokollversion und Funktion nach der Aktualisierung mit einer Portalversion und Funktion übereinstimmen, die von dem vorkonfigurierten Portalserver unterstützt werden.

8. Portalsystem, das einen vorkonfigurierten Portal-Client nach einem der Ansprüche 5 bis 7 und einen Portalserver umfasst:
wobei der vorkonfigurierte Portalserver dafür konfiguriert ist, eine Instanzverbindung mit dem Portal-Client durch Funktionsaushandlung herzustellen und seine Informationen gegenüber dem Portal-Client, der die mit dem vorkonfigurierten Portalserver hergestellte Instanzverbindung hat, bekanntzugeben, wobei der vorkonfigurierte Portalserver dafür konfiguriert ist, Lastinformationen des Portalservers gegenüber dem Portal-Client, der die mit dem Portalserver hergestellte Instanzverbindung hat, bekanntzugeben, und
wobei der Portal-Client dafür konfiguriert ist, die Instanzverbindung mit dem vorkonfigurierten Portalserver durch Funktionsaushandlung herzustellen und seine Informationen gegenüber dem vorkonfigurierten Portalserver, der die mit dem Portal-Client hergestellte Instanzverbindung hat, bekanntzugeben, wobei der Portal-Client dafür konfiguriert ist, die Instanzverbindung zwischen dem Portal-Client und dem Portalserver zu unterbrechen, wenn der Portal-Client gemäß den Lastinformationen, die von dem vorkonfigurierten Portalserver bekanntgegeben wurden, der die mit dem ersten Aushandlungs- und Verbindungsmodul hergestellte Instanzverbindung hat, bestimmt, dass eine aktuelle Last des Portalservers einen voreingestellten Schwellenwert übersteigt, und eine zeitweilig unterbrochene Instanzverbindung wiederherzustellen, wenn der Portal-Client gemäß den Lastinformationen bestimmt, dass die aktuelle Last des Portalservers den voreingestellten Schwellenwert nicht übersteigt.

9. Portalsystem nach Anspruch 8, wobei der Portalserver ein zweites Aushandlungs- und Verbindungsmodul und ein zweites Bekanntgabemodul umfasst,
wobei das zweite Aushandlungs- und Verbindungsmodul dafür konfiguriert ist, durch Funktionsaushandlung eine Instanzverbindung mit einem Portal-Client herzustellen, und
wobei das zweite Aushandlungs- und Verbindungsmodul dafür konfiguriert ist, Informationen des Portalservers gegenüber dem Portal-Client, der die mit dem zweiten Aushandlungs- und Verbindungsmodul hergestellte Instanzverbindung hat, bekanntzugeben, wobei das zweite Aushandlungs- und Verbindungsmodul dafür konfiguriert ist, Lastinformationen des Portalservers gegenüber dem Portal-Client, der die mit dem Portalserver hergestellte Instanzverbindung hat, bekanntzugeben.

10. Portalsystem nach Anspruch 9, wobei
das zweite Aushandlungs- und Verbindungsmodul ferner dafür konfiguriert ist, die Instanzverbindung mit dem Portal-Client herzustellen, wenn durch Funktionsaushandlung mit dem Portal-Client bestimmt wird, dass eine von dem Portal-Client benötigte Portalprotokollversion und Funktion mit einer Portalversion und Funktion übereinstimmen, die von dem vorkonfigurierten Portalserver unterstützt werden, oder
das zweite Aushandlungs- und Verbindungsmodul ferner dafür konfiguriert ist, die Instanzverbindung mit dem Portal-Client zu unterbrechen, wenn der Portalserver sein Portalprotokoll und/oder seine Funktion aktualisiert, und die Instanzverbindung mit dem Portal-Client erneut herzustellen, wenn durch Funktionsaushandlung mit dem Portal-Client bestimmt wird, dass eine von dem Portal-Client benötigte Portalprotokollversion und Funktion nach der Aktualisierung mit einer Portalversion und Funktion übereinstimmen, die von dem vorkonfigurierten Portalserver unterstützt werden.

## Revendications

1. Procédé de gestion de dispositif de portail, comprenant les étapes ci-dessous consistant à :
établir une connexion d'instance entre un dispositif client de portail et un serveur de portail préconfiguré, par le biais d'une négociation de capacités ;
annoncer, par le biais de chacun parmi le dispositif client de portail et le serveur de portail préconfiguré présentant la connexion d'instance établie entre eux, ses informations à son extrémité opposée ; dans lequel l'étape d'annonce, par chacun du dispositif client de portail et du serveur de portail préconfiguré présentant la connexion d'instance établie entre eux, de ses informations à son extrémité opposée, consiste à : annoncer, par le biais du serveur de portail préconfiguré, ses informations de charge, au dispositif client de portail présentant la connexion d'instance établie avec le serveur de portail préconfiguré ; et
mettre à jour, par le biais du dispositif client de portail, la connexion d'instance entre le dispositif client de portail et le serveur de portail préconfiguré, selon les informations de charge, dans lequel l'étape de mise à jour comprend les étapes dans lesquelles : si le dispositif client de portail détermine, selon les informations de charge, qu'une charge en cours du serveur de portail dépasse un seuil prédéfini, la connexion d'instance avec le serveur de portail est temporairement déconnectée ; si le dispositif client de portail détermine, selon les informations de charge, que la charge en cours du serveur de portail ne dépasse pas le seuil prédéfini, une connexion d'instance temporairement déconnectée est récupérée.

2. Procédé selon la revendication 1, dans lequel l'étape d'établissement d'une connexion d'instance entre un dispositif client de portail et un serveur de portail préconfiguré, par le biais d'une négociation de capacités, comprend l'étape ci-dessous consistant à :
établir la connexion d'instance entre le dispositif client de portail et le serveur de portail préconfiguré lorsque le dispositif client de portail et le serveur de portail préconfiguré déterminent, par le biais d'une négociation de capacités, qu'une fonction et une version de protocole de portail requises par le dispositif client de portail correspondent à une fonction et une version de portail prises en charge par le serveur de portail préconfiguré.

3. Procédé selon la revendication 1, comprenant en outre les étapes ci-dessous consistant à : suite à l'étape d'établissement d'une connexion d'instance entre un dispositif client de portail et un serveur de portail préconfiguré, par le biais d'une négociation de capacités :
déconnecter la connexion d'instance entre le dispositif client de portail et le serveur de portail préconfiguré lorsque le dispositif client de portail met à niveau son protocole de portail, et rétablir la connexion d'instance entre le dispositif client de portail et le serveur de portail préconfiguré lorsque le dispositif client de portail et le serveur de portail préconfiguré déterminent, par le biais d'une négociation de capacités, qu'une fonction et une version de protocole portail requises par le dispositif client de portail après la mise à niveau correspondent à une fonction et une version de portail prises en charge par le serveur de portail préconfiguré.

4. Procédé selon la revendication 1, comprenant en outre les étapes ci-dessous consistant à : suite à l'étape d'établissement d'une connexion d'instance entre un dispositif client de portail et un serveur de portail préconfiguré, par le biais d'une négociation de capacités :
déconnecter la connexion d'instance entre le dispositif client de portail et le serveur de portail préconfiguré lorsque le serveur de portail préconfiguré présentant la connexion d'instance établie avec le dispositif client de portail met à niveau son protocole de portail et/ou sa fonction de portail, et rétablir la connexion d'instance entre le dispositif client de portail et le serveur de portail préconfiguré lorsque le dispositif client de portail et le serveur de portail préconfiguré déterminent, par le biais d'une négociation de capacités, qu'une fonction et une version de protocole de portail requises par le dispositif client de portail correspondent à une fonction et une version de portail prises en charge par le serveur de portail préconfiguré après la mise à niveau.

5. Dispositif client de portail comprenant un premier module de négociation et de connexion et un premier module d'annonce ;
dans lequel le premier module de négociation et de connexion est configuré de manière à établir une connexion d'instance avec un serveur de portail préconfiguré, par le biais d'une négociation de capacités ; et
dans lequel le premier module d'annonce est configuré de manière à annoncer des informations du dispositif client de portail au serveur de portail préconfiguré présentant la connexion d'instance établie avec le premier module de négociation et de connexion, et dans lequel le premier module de négociation et de connexion est configuré de manière à déconnecter la connexion d'instance entre le dispositif client de portail et le serveur de portail lorsque le dispositif client de portail détermine, selon les informations de charge annoncées par le serveur de portail préconfiguré présentant la connexion d'instance établie avec le premier module de négociation et de connexion, qu'une charge en cours du serveur de portail dépasse un seuil prédéfini, et récupérer une connexion d'instance temporairement déconnectée lorsque le dispositif client de portail détermine, selon les informations de charge, que la charge en cours du serveur de portail ne dépasse pas le seuil prédéfini.

6. Dispositif client de portail selon la revendication 5, dans lequel :
le premier module de négociation et de connexion est en outre configuré de manière à établir la connexion d'instance avec le serveur de portail préconfiguré lorsqu'il est déterminé, par le biais d'une négociation de capacités avec le serveur de portail préconfiguré, qu'une fonction et une version de protocole de portail requises par le dispositif client de portail correspondent à une fonction et une version de portail prises en charge par le serveur de portail préconfiguré.

7. Dispositif client de portail selon la revendication 5, dans lequel :
le premier module de négociation et de connexion est en outre configuré de manière à déconnecter la connexion d'instance avec le serveur de portail préconfiguré lorsque le dispositif client de portail met à niveau son protocole de portail, et à rétablir la connexion d'instance avec le serveur de portail préconfiguré lorsqu'il est déterminé, par le biais d'une négociation de capacités avec le serveur de portail préconfiguré, qu'une fonction et une version de protocole portail requises par le dispositif client de portail après la mise à niveau correspondent à une fonction et une version de portail prises en charge par le serveur de portail préconfiguré.

8. Système de portail comprenant un dispositif client de portail préconfiguré selon l'une quelconque des revendications 5 à 7, et un serveur de portail ;
dans lequel le serveur de portail préconfiguré est configuré de manière à établir une connexion d'instance avec le dispositif client de portail, par le biais d'une négociation de capacités, et à annoncer ses informations au dispositif client de portail présentant la connexion d'instance établie avec le serveur de portail préconfiguré, dans lequel le serveur de portail préconfiguré est configuré de manière à annoncer des informations de charge du serveur de portail au dispositif client de portail présentant la connexion d'instance établie avec le serveur de portail ; et
dans lequel le dispositif client de portail est configuré de manière à établir la connexion d'instance avec le serveur de portail préconfiguré, par le biais d'une négociation de capacités, et à annoncer ses informations au serveur de portail préconfiguré présentant la connexion d'instance établie avec le dispositif client de portail, dans lequel le dispositif client de portail est configuré de manière à déconnecter la connexion d'instance entre le dispositif client de portail et le serveur de portail lorsque le dispositif client de portail détermine, selon les informations de charge annoncées par le serveur de portail préconfiguré présentant la connexion d'instance établie avec le premier module de négociation et de connexion, qu'une charge en cours du serveur de portail dépasse un seuil prédéfini, et à récupérer une connexion d'instance temporairement déconnectée lorsque le dispositif client de portail détermine, selon les informations de charge, que la charge en cours du serveur de portail ne dépasse pas le seuil prédéfini.

9. Système de portail selon la revendication 8, dans lequel le serveur de portail comprend un second module de négociation et de connexion et un second module d'annonce ;
dans lequel le second module de négociation et de connexion est configuré de manière à établir une connexion d'instance avec un dispositif client de portail, par le biais d'une négociation de capacités ; et
dans lequel le second module d'annonce est configuré de manière à annoncer des informations du serveur de portail au dispositif client de portail présentant la connexion d'instance établie avec le second module de négociation et de connexion, dans lequel le second module d'annonce est configuré de manière à annoncer des informations de charge du serveur de portail au dispositif client de portail présentant la connexion d'instance établie avec le serveur de portail.

10. Système de portail selon la revendication 9, dans lequel :
le second module de négociation et de connexion est en outre configuré de manière à établir la connexion d'instance avec le dispositif client de portail lorsqu'il est déterminé, par le biais d'une négociation de capacités avec le dispositif client de portail, qu'une fonction et une version de protocole de portail requises par le dispositif client de portail correspondent à une fonction et une version de portail prises en charge par le serveur de portail ; ou
le second module de négociation et de connexion est en outre configuré de manière à déconnecter la connexion d'instance avec le dispositif client de portail lorsque le serveur de portail met à niveau son protocole de portail et/ou sa fonction de portail, et à rétablir la connexion d'instance avec le dispositif client de portail lorsqu'il est déterminé, par le biais d'une négociation de capacités avec le dispositif client de portail, qu'une fonction et une version de protocole de portail requises par le dispositif client de portail correspondent à une fonction et une version de portail prises en charge par le serveur de portail après la mise à niveau.
